# EUROPÄISCHE PATENTSCHRIFT

(11) **EP 0 344 451 B1**
(45) Veröffentlichungstag und Bekanntmachung des Hinweises auf die Patenterteilung: **28.07.1993**
(21) Anmeldenummer: 89107239.9
(22) Anmeldetag: 21.04.1989
(51) Int. Cl.: B23Q 3/12, B23B 31/16

(54) **Vorrichtung zur lösbaren Verbindung eines Werkstückträgers mit einem Betätigungsglied**
Coupling device for a work piece carrier and a controlling member
Dispositif d'accouplement d'un porte-pièce et un membre d'actionnement

(30) Priorität: 03.06.1988 DE 3818907
(43) Veröffentlichungstag der Anmeldung: 06.12.1989
(73) Patentinhaber: SMW Schneider & Weisshaupt GmbH, 88074 Meckenbeuren (DE)
(72) Erfinder: Hiestand, Karl, D-7798 Pfullendorf (DE)
(74) Vertreter: Engelhardt, Guido, Dipl.-Ing.

(56) Entgegenhaltungen:
- EP-A- 0 189 697
- EP-A- 0 245 629
- CH-A- 556 708

## Beschreibung

Die Erfindung bezieht sich auf eine Vorrichtung zur lösbaren Verbindung eines Spannkolbens eines Werkstückträgers, insbesondere eines Kraftspannfutters, mit einem Betätigungsglied, insbesondere in Form einer Zugstange, wobei das Betätigungsglied mit einem Kupplungsglied versehen ist, das an dem Betätigungsglied axial formschlüssig gehalten und mittels eines Verstellgliedes über Keilgetriebe mit Keilflächen zwangsläufig verstellbar ist und der Spannkolben und das Kupplungsglied eine oder mehrere einander zugeordnete zuwammenwirkende Hinterhakungen in Form von Ausnehmungen und Vorsprüngen mit achssenkrecht verlaufenden Anlageflächen zur Übertragung der Betätigungskräfte aufweisen.

Durch die EP-A-0 189 697 ist eine derartige Vorrichtung bekannt. In das durch Segmente gebildete Kupplungsglied ist hierbei an einem Ende eine Ringfeder eingesetzt, so daß zum Lösen der Verbindung mit Hilfe des gesonderten axial verschiebbaren Verstellgliedes die Segmente des Kupplungsgliedes durch die Kraft der Ringfeder radial nach außen verschwenkt werden können. Des weiteren sind an dem Kupplungsglied und dem Verstellglied zusammenwirkende Schrägflächen angearbeitet, mittels denen die Segmente durch eine Axialverschiebung des Verstellgliedes zurückgeschwenkt und somit eingerückt werden.

Abgesehen davon, daß diese bekannte Spannfutter-Schnellwechselvorrichtung eine Vielzahl von Bauteilen aufweist und somit zu deren Herstellung ein großer Fertigungsaufwand erforderlich ist, ist ferner von Nachteil, daß die Verbindung zwischen dem Spannkolben und dem Betätigungsglied durch die Schwenkbewegungen der Segmente des Kupplungsgliedes hergestellt wird. Dazu ist nämlich ein Freiraum unumgänglich, diese Vorrichtung ist demnach mit Spiel behaftet, und es können, da mitunter nur eine Linienberührung gegeben ist, keine großen Kräfte übertragen werden.

Die Verbindung zwischen dem Spannkolben und dem Betätigungsglied ist somit nicht unmittelbar durch dieses zu lösen bzw. herzustellen, vielmehr ist dazu das Verstellglied gesondert zu verschieben, so daß eine einfache Überwachung des Betriebszustandes nicht möglich ist. Des weiteren ist von Nachteil, daß die über das Betätigungsglied zugeführten zum Einspannen eines Werkstückes benötigten hohen Axialkräfte über die Schrägflächen übertragen werden. Eine großflächige formschlüssige Verbindung ist demnach nicht gegeben; vielmehr treten, bedingt durch diese Schrägflächen, auch nach außen gerichtete Kraftkomponenten auf, die auf die konzentrisch ineinander gelagerten Bauteile einwirken. Deformierungen dieser Teile sind vielfach die Folge. Eine zufriedenstellende Funktionsweise ist bei dieser bekannten Schnellwechseleinrichtung nicht gewährleistet.

Aufgabe der Erfindung ist es daher, eine Vorrichtung zur lösbaren Verbindung eines Spannkolbens eines Werkstückträgers mit einem Betätigungsglied der vorgenannten Gattung zu schaffen, die nicht nur auf sehr einfache Weise wirtschaftlich zu fertigen ist, sondern bei der auch ohne Schwierigkeiten die Verbindung zwischen dem Spannkolben und dem diesem zugeordneten Betätigungsglied zwangsläufig hergestellt und gelöst werden kann. Des weiteren soll erreicht werden, daß bei der Übertragung der zum Einspannen eines Werkstückes erforderlichen hohen Zug- und Druckkräfte von dem Betätigungsglied auf den Spannkolben keine radial gerichteten Kraftkomponenten und damit keine Deformierungen und dadurch bedingte hohe Reibkräfte auftreten. Die Verbindung zwischen dem Betätigungsglied und dem Spannkolben soll vielmehr zuverlässig in kurzer Zeit problemlos mit Hilfe des Verstellgliedes hergestellt und gelöst werden können und damit auch leicht überwachbar sein.

Gemäß der Erfindung wird dies bei einer Vorrichtung zur lösbaren Verbindung eines Werkstückträgers mit einem Betätigungsglied der eingangs genannten Art dadurch erreicht, daß die Hinterhakungen durch Radialverschiebungen des Kupplungsgliedes miteinander kuppelbar sowie voneinander lösbar sind,
daß das Kupplungsglied mittels eines T-förmig ausgebildeten Ansatzes in einer zugeordneten Nut des Betätigungsgliedes radial verstellbar gehalten ist,
daß das Kupplungsglied und der Spannkolben an den einander zugekehrten Enden jeweils mit einer axial und radial offenen Freisparung versehen sind, in die der Spannkolben bzw. das Kupplungsglied gegenseitig eingreifen und die in ihren Ausmaßen dem jeweils anderen Teil entsprechen, und
daß die Hinterhakungen des Kupplungsgliedes und des Spannkolbens in die sich in Längsrichtung der Freisparungen erstreckenden einander gegenüberliegenden Flächen eingearbeitet sind.

Um Kippkräfte zu vermeiden, sollten die Hinterhakungen in der Mitte der Längsachse des Spannkolbens und des Kupplungsgliedes in Form von ebenen achssenkrechten Ausnehmungen und Vorsprüngen in diese eingearbeitet sein und gleichmäßig über deren Längsachsen überstehen.

Die zur Radialverschiebung des Kupplungsgliedes vorgesehenen Keilgetriebe können in einfacher Ausgestaltung durch an diesem und dem Verstellglied angebrachte einander zugeordnete und in deren Längsachse geneigt verlaufende Keilflächen gebildet werden.

Um die Radialverschiebung des Kupplungsgliedes auf einfache Weise bewerkstelligen zu können, ist es angebracht, das Verstellglied mit einander gegenüberliegend angeordneten in dessen Längsachse geneigt verlaufenden Keilfächen zu versehen, die mit den Keilflächen des Kupplungsgliedes zusammenwirken, wobei das Kupplungsglied einen oder mehrere radial über das Betätigungsglied und/oder den Spannkolben überstehende, angeschraubte oder angeformte Ansätze aufweisen sollten, an denen die Keilfächen angearbeitet sind.

Zweckmäßig ist es ferner, die Keilflächen des Verstellgliedes an in dieses eingesetzte Keilstücken vorzusehen und die Außenmantelflächen der Ansätze des Kupplungsgliedes und/oder die Innenmantelflächen der Keilstücke des Verstellgliedes als Führungsflächen auszubilden. Auch sollte der Sapnnkolben und/oder das Kupplungsglied mit einer oder mehreren an deren die Hinterhakungen bildenden Vorsprüngen angearbeiteten Einführschrägen ausgestattet sein.

Bei einem mittels Spannbolzen an einem Adaptionsglied lösbar zu befestigenden Spannfutter ist es angebracht, die auf die Spannbolzen einwirkende Spannhülse als mit dem Kupplungsglied zusammenwirkendes Verstellglied auszubilden.

Der Spannkolben kann auch über ein z. B. an diesem angeschraubtes Zwischenstück als Adapter mit dem Kupplungsglied lösbar verbunden werden.

Wird eine Vorrichtung zur lösbaren Verbindung eines Spannkolbens eines Werkstückträgers mit einem Betätigungsglied gemäß der Erfindung ausgebildet, so ist es ohne weiteres möglich, die Verbindung zwischen dem Betätigungsglied und dem Spannkolben auf äußerst einfache Weise durch eine zwangläufige Radialverschiebung des Kupplungsgliedes mit Hilfe des Verstellgliedes herzustellen oder zu lösen. Es ist demnach nicht nur eine zuverlässige Lagekontrolle des Kupplungsgliedes in Abhängigkeit von der Stellung des auf dieses einwirkenden Verstellgliedes leicht zu bewerkstelligen, so daß Funktionsstörungen nahezu ausgeschlossen sind, sondern es ist auch eine Übertragung hoher Zug- und Druckkräfte über ausschließlich achssenkrecht gerichteten Flächen, die ohne weiteres entsprechend groß bemessen werden können, gegeben.

Nach außen gerichtete auf das Verstellglied einwirkende und von diesem aufzunehmende Kräfte treten demnach bei einem Spannvorgang nicht auf, Deformierungen und dadurch bedingte hohe Reibkräfte sind somit nicht in Kauf zu nehmen. Trotz der einfachen Ausgestaltung ist bei der erfindungsgemäßen Vorrichtung, die nur aus wenigen Bauteilen besteht und somit wirtschaftlich zu fertigen ist, die Verbindung zwischen dem Betätigungsglied und dem Spannkolben, die sich auch durch eine hohe Zuverlässigkeit auszeichnet, ohne Schwierigkeiten und in kurzer Zeit mittels dem auf das Kupplungsglied einwirkenden Betätigungsglied herzustellen oder zu lösen.

In der Zeichnung ist ein Ausführungsbeispiel einer gemäß der Erfindung ausgebildeten Vorrichtung zur lösbaren Verbindung eines Werkstückträgers mit einem Betätigungsglied dargestellt und nachfolgend im einzelnen erläutert. Hierbei zeigt:
- Figur 1: die Vorrichtung, mittels der der Spannkolben eines Kraftspannfutters über ein Kupplungsglied lösbar mit einer Zugstange verbunden ist, in einem Axialschnitt, teilweise auch in einem Schnitt nach der Linie I - I der Figur 2,
- Figur 2: die Verbindung des Kupplungsgliedes mit der Zugstange bei der Vorrichtung nach Figur 1 in Draufsicht,
- Figur 3: die Vorderansicht des den Werkstückträger aufnehmenden Adaptionsgliedes nach Figur 1 ohne Abschlußdeckel und
- Figur 4: den Spannkolben als Einzelteil.

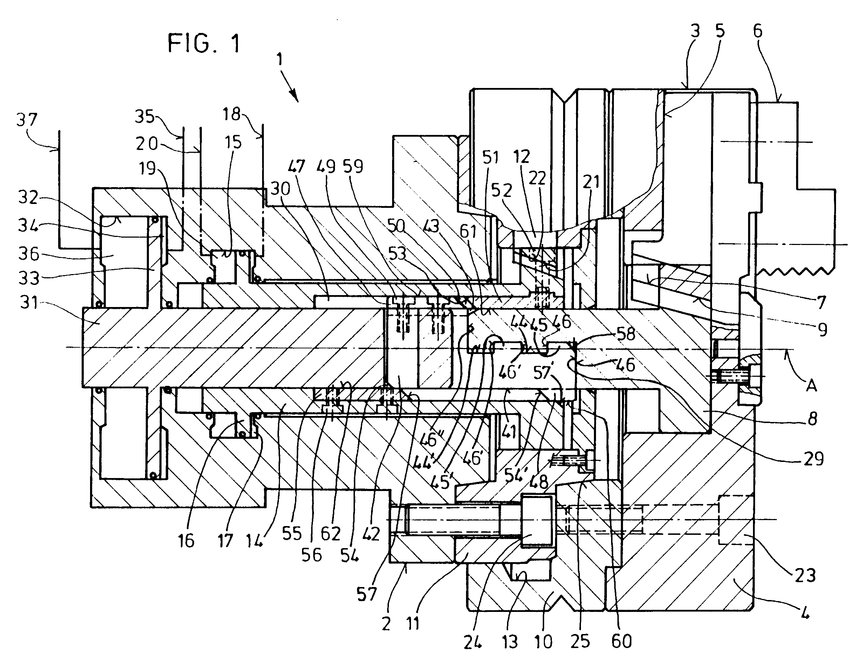

Die in Figur 1 dargestellte und mit 1 bezeichnete Vorrichtung dient zur lösbaren Verbindung eines als Kraftspannfutter 3 ausgebildeten Werkstückträgers mit der Drehspindel 2 einer Werkzeugmaschine, um in kurzer Zeit einen Wechsel des Kraftspannfutters 3 bewerkstelligen zu können. In dessen Futterkörper 4 sind hierbei in radial gerichteten Nuten 5 Spannbacken 6 verschiebbar eingesetzt, die jeweils mittels eines angearbeiteten Keilhakens 7 mit einem Spannkolben 8 in Triebverbindung stehen, der über Schrägflächen 9 auf die Keilhaken 7 der Spannbacken 6 einwirkt. Mittels eines Flansches 10, an dem durch Schrauben 23 der Futterkörper 4 befestigt ist, ist dieser auf einem Adaptionsglied 11 lösbar verspannt.

Um dies zu bewerkstelligen, sind in dem Adaptionsglied 11, das mittels Schrauben 24 an der Drehspindel 2 befestigt ist, radial verschiebbare Spannbolzen 12 eingesetzt, die mit Hilfe eines als Spannhülse ausgebildeten VerVerstellgliedes 14 in eine in den Flansch 10 eingearbeitete ringnutförmige Hinterschneidung 13 einführbar sind. Da die Spannbolzen 12 sowie die Hinterschneidung 13 einander zugeordnete Schrägflächen aufweisen, wird das Spannfutter beim Einführen der Spannbolzen 12 in die Hinterschneidung 13 fest auf eine kegelige Anlagefläche 25 des Adaptionsgliedes 11 gezogen.

Zur axialen Verschiebung des Verstellgliedes 14 ist ein in einem an der Drehspindel 2 angeflanschten Zylinder 15 eingesetzter Kolben 16 vorgesehen, der fest mit dem Verstellglied 14 verbunden ist. Wird dem Druckraum 19 über eine Druckleitung 20 Druckmittel zugeführt, so werden der Kolben 16 und das Verstellglied 14 nach rechts verschoben. Und da das Verstellglied 14 über Schrägflächen 22 auf an den Spannbolzen 12 angearbeiteten Keilhaken 21 einwirkt, wird die Axialbewegung des Verstellgliedes 14 umgelenkt und die Spannbolzen 12 werden radial nach außen verstellt. Zur Rückführung der Spannbolzen 12 ist über eine Druckmittelleitung 18 dem Druckraum 17 Druckmittel zuzuführen.

Der auf die Spannbacken 6 einwirkende Spannkolben 8 wird durch ein axial verschiebbares Betätigungsglied 31 in Form einer Zugstange betätigt. Dazu ist in einem Zylinder 32, der mit dem Zylinder 15 eine Baueinheit bildet, ein weiterer Kolben 33 eingesetzt, der ebenfalls beidseitig von Druckmittel beaufschlagbar und fest mit dem Betätigungsglied 31 verbunden ist. Bei einer Druckmittelzuführung über eine Druckmittelleitung 35 in den Druckraum 34 wird das Betätigungsgliedes 31 nach links und die Spannbacken 6 somit radial nach innen, bei einer Zuführung über eine Druckmittelleitung 37 in den Druckraum 36 dagegen radial nach außen verstellt.

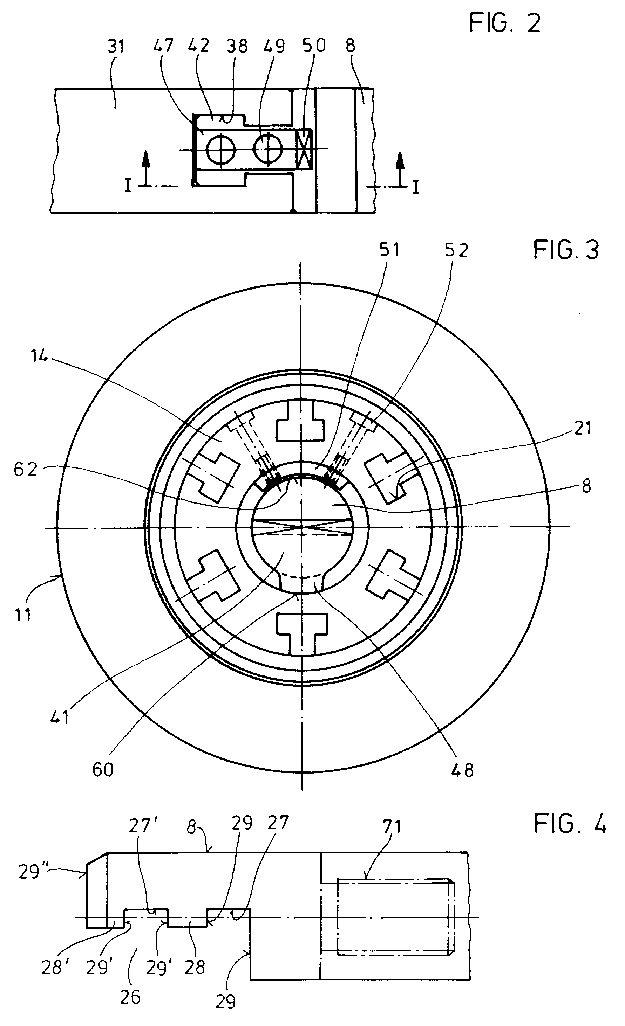

Um die Triebverbindung zwischen dem Betätigungsglied 31 und dem Spannkolben 8 leicht lösen zu können, ist ein Kupplungsglied 41 vorgesehen, das zwangläufig in radialer Richtung mit Hilfe des Verstellgliedes 14 verschiebbar gehalten ist. Dazu ist an dem Betätigungsglied 31, wie dies insbesondere der Figur 2 zu entnehmen ist, eine T-förmig gestaltete Nut 38 eingearbeitet und an dem Kupplungsglied 41 ist ein entsprechender Ansatz 42 angeformt, der in die Nut 38 eingreift. Des weiteren sind der Spannkolben 8 und das Kupplungsglied 41 auf den einander zugekehrten Seiten mit offenen Freisparungen 26 bzw. 43 versehen, und in deren sich in der Längsachse A erstreckenden einander gegenüberliegenden Flächen sind Ausnehmungen 27 und 27' bzw. 44 und 44' mit achssenkrecht verlaufenden Anlageflächen 29, 29' und 29'' bzw. 46, 46' und 46'' eingearbeitet, so daß Vorsprünge 28 und 28' bzw. 45 und 45' gebildet sind. Der Spannkolben 8 und das Kupplungsglied 41 sind somit über diese Hinterhakungen lösbar miteinander verbunden, in dem das Kupplungsglied 41 in radialer Richtung um die Höhe der Vorsprünge 45, 45' verschoben wird.

Die Radialverschiebung des Kupplungsgliedes 41 zum Lösen oder Wiederherstellen der Triebverbindung zwischen dem Betätigungsglied 31 und dem Spannkolben 8 wird hierbei mittels des Verstellgliedes 14 bewerkstelligt. Dazu sind an dem Kupplungsglied 41 in radialer Richtung über den Durchmesser des Spannkolbens 8 überstehende Ansätze 47 48 angebracht, die, solange das Betätigungsglied 31 mit dem Spannkolben 8, wie dies in Figur 1 dargestellt ist, trieblich verbunden ist, in den freigesparten Bereich 30 des Verstellgliedes 14 eingreifen. Des weiteren sind in den freigesparten Bereich 30 des Verstellgliedes 14 zwei einander gegenüberliegend angeordnete Keilstücke 51 und 55 eingesetzt, die mittels Schrauben 52 bzw. 56 an diesem befestigt sind und Keilflächen 53 und 57 aufweisen, die mit an dem Kupplungsglied 41 angearbeiteten Keilflächen 50 und 54 zusammenwirken. Die Keilfläche 50 ist hierbei an dem mittels Schrauben 49 befestigten Ansatz 47 angearbeitet, außerdem weist der Ansatz 48 eine Keilfläche 54' auf, die mit einer weiteren Keilfäche 57' des Verstellgliedes 14 zusammenwirkt.

Zum Lösen der Verbindung zwischen dem Kupplungsglied 41 und dem Spannkolben 8 ist das Verstellglied 14 aus der in Figur 1 dargestellten Lage nach links zu verschieben. Die Keilfläche 53 des Verstellgliedes 14 wirkt dabei auf die Keilfläche 50 des Kupplungsgliedes 41 ein, so daß dieses radial nach unten verschoben wird. Die Vorsprünge 45, 45' des Kupplungsgliedes 41 werden dadurch aus den Ausnehmungen 28, 28' des Spannkolbens 8 ausgefahren, so daß die Triebverbindung zwischen diesem und dem Kupplungsglied 41 gelöst ist. Und da das Verstellglied 14 gleichzeitig auf die Spannbolzen 12 einwirkt, kann in dieser Betriebsstellung das Kraftspannfutter 3 von dem Adaptionsglied 11 abgenommen werden.

Zur erneuten Ankoppelung des auf die Anlagefläche 25 aufgesetzten Kraftspannfutters 3 ist das Verstellglied 14 dagegen nach rechts zu verschieben. Dabei werden nicht nur die Spannbolzen 12 radial nach außen verstellt und der Flansch 10 fest auf die Anlagefläche 25 gezogen, sondern es wird auch die Triebverbindung zwischen dem Kupplungsglied 41 und dem Spannkolben 8 wieder hergestellt. Die an dem Verstellglied 14 angearbeiteten Keilflächen 57 und 57' wirken nämlich bei dessen Verschiebung nach rechts auf die Keilflächen 54 und 54' des Kupplungsgliedes 41 ein, so daß dieses radial nach oben verstellt und in die Ausgangslage zurückgeführt wird. Die Vorsprünge 45, 45' des Kupplungsgliedes 41 greifen somit wiederum in die Ausnehmungen 27, 27' des Spannkolbens 8 ein, so daß die Spannbacken 6 je nach Bewegungsrichtung des Betätigungsgliedes 31 in dieser Betriebsstellung des Kupplungsgliedes 41 nach innen oder außen verstellt werden können, ohne daß auf das Verstellglied 14 Kraftkomponenten einwirken.

Da die miteinander zu kuppelnden Vorsprünge 28, 28' bzw. 45, 45', wie dies an dem Vorsprung 45 gezeigt ist, mit Einführschrägen 58 ausgestattet sind, ist das Ineinanderschieben der Vorsprünge 28, 28' und 45, 45' ohne Schwierigkeiten zu bewerkstelligen. Außerdem sind die Außenmantelflächen der Ansätze 47 und 48 des Kupplungsgliedes 41 sowie die Innenmantelflächen der Keilstücke 51 und 55 als Führungsflächen 59, 60 bzw. 61, 62 ausgebildet, das Kupplungsglied 41 sowie der Spannkolben 8 sind somit zufriedenstellend abgestützt und geführt.

Die Ausnehmungen 27, 27' sowie die Vorsprünge 28, 28' und die dadurch gebildeten Anlageflächen 29, 29', 29'' können unmittelbar an dem Spannkolben 8 angearbeitet sein, es ist aber auch möglich, diese entsprechend der strichpunktierten Darstellung in Figur 4 an einem Zwischenstück 71 als Adapter vorzusehen, das in den Spannkolben 8 einzuschrauben ist.

## Patentansprüche

1. Vorrichtung (1) zur lösbaren Verbindung eines Spannkolbens (8) eines Werkstückträgers, insbesondere eines Kraftspannfutters (3), mit einem Betätigungsglied (31), insbesondere in Form einer Zugstange, wobei das Betätigungsglied (31) mit einem Kupplungsglied (41) versehen ist, das an dem Betätigungsglied (31) axial formschlüssig gehalten und mittels eines Verstellgliedes (14) über Keilgetriebe mit Keilflächen (50, 53 bzw. 54, 54', 57, 57') zwangsläufig verstellbar ist und der Spannkolben (8) und das Kupplungsglied (41) eine oder mehrere einander zugeordnete zusammenwirkende Hinterhakungen in Form von Ausnehmungen (27, 27' bzw. 44, 44') und Vorsprüngen (28, 28' bzw. 45, 45') mit achssenkrecht verlaufenden Anlageflächen (29, 29', 29'' bzw. 46, 46', 46'') zur Übertragung der Betätigungskräfte aufweisen,
**dadurch gekennzeichnet,**
daß die Hinterhakungen durch Radialverschiebungen des Kupplungsgliedes (41) miteinander kuppelbar sowie voneinander lösbar sind,
daß das Kupplungsglied (41) mittels eines T-förmig ausgebildeten Ansatzes (42) in einer zugeordneten Nut (38) des Betätigungsgliedes (31) radial verstellbar gehalten ist,
daß das Kupplungsglied (41) und der Spannkolben (8) an den einander zugekehrten Enden jeweils mit einer axial und radial offenen Freisparung (43 bzw. 26) versehen sind, in die der Spannkolben (8) bzw. das Kupplungsglied (41) gegenseitig eingreifen und die in ihren Ausmaßen dem jeweils anderen Teil entsprechen, und
daß die Hinterhakungen des Kupplungsgliedes (41) und des Spannkolbens (8) in die sich in Längsrichtung der Freisparungen (43 bzw. 26) erstreckenden einander gegenüberliegenden Flächen eingearbeitet sind.

2. Vorrichtung nach Anspruch 1,
**dadurch gekennzeichnet,**
daß die Hinterhakungen in der Mitte der Längsachse (A) des Spannkolbens (8) und des Kupplungsgliedes (41) in Form von ebenen achssenkrechten Ausnehmungen (27, 27', 44, 44') und Vorsprüngen (28, 28', 45, 45') in diese eingearbeitet sind und gleichmäßig über deren Längsachsen (A) überstehen.

3. Vorrichtung nach Anspruch 1 oder 2,
**dadurch gekennzeichnet,**
daß die zur Radialverschiebung des Kupplungsgliedes (41) vorgesehenen Keilgetriebe durch an diesem und dem Verstellglied (14) angebrachte einander zugeordnete und in deren Längsachsen (A) geneigt
verlaufende Keilflächen (50, 53 bzw. 54, 54', 57, 57') gebildet sind.

4. Vorrichtung nach einem oder mehreren der Ansprüche 1 bis 3,
**dadurch gekennzeichnet,**
daß zur Radialverschiebung des Kupplungsgliedes (41) das Verstellglied (14) mit einander gegenüberliegend angeordneten in dessen Längsachse (A) geneigt verlaufenden Keilflächen (53, 57, 57') versehen ist, die mit den Keilflächen (50, 54, 54') des Kupplungsgliedes (41) zusammenwirken.

5. Vorrichtung nach Anspruch 4,
**dadurch gekennzeichnet,**
daß das Kupplungsglied (41) einen oder mehrere radial über das Betätigungsglied (31) und/oder den Spannkolben (8) überstehende, angeschraubte oder angeformte Ansätze (47, 48) aufweist, an denen die Keilflächen (50, 54') angearbeitet sind.

6. Vorrichtung nach einem oder mehreren der Ansprüche 1 bis 5,
**dadurch gekennzeichnet,**
daß die Keilflächen (53, 57) des Verstellgliedes (14) an in diese eingesetzte Keilstücke (51, 55) angearbeitet sind.

7. Vorrichtung nach einem oder mehreren der Ansprüche 1 bis 6,
**dadurch gekennzeichnet,**
daß die Außenmantelflächen der Ansätze (47, 48) des Kupplungsgliedes (41) und/oder die Innenmantelflächen der Keilstücke (51, 55) des Verstellgliedes (31) als Führungsflächen (59, 60 bzw. 61, 62) ausgebildet sind.

8. Vorrichtung nach einem oder mehreren der Ansprüche 1 bis 7,
**dadurch gekennzeichnet,**
daß der Spannkolben (8) und/oder das Kupplungsglied (41) mit einer oder mehreren an deren die Hinterschneidungen bildenden Vorsprüngen (28, 28' bzw. 45, 45') angearbeiteten Einführschrägen (58) versehen sind.

9. Vorrichtung nach einem oder mehreren der Ansprüche 1 bis 8,
**dadurch gekennzeichnet,**
daß bei einem mittels Spannbolzen (12) an einem Adaptionsglied (11) lösbar zu befestigenden Spannfutter (3) als Werkstückträger die auf die Spannbolzen (12) einwirkende Spannhülse als mit dem Kupplungsglied (41) zusammenwirkendes Verstellglied (14) ausgebildet ist.

10. Vorrichtung nach einem oder mehreren der Ansprüche 1 bis 9,
**dadurch gekennzeichnet,**
daß der Spannkolben (8) über ein z.B. an diesem angeschraubtes Zwischenstück (71) als Adapter mit dem Kupplungsglied (41) lösbar verbindbar ist.

## Claims

1. Coupling device (1) for coupling a chuck piston (8) of a work piece carrier, in particular a heavy duty chuck (3), with a controlling member (31), in particular in the form of a draw rod, whereby the controlling member (31) is provided with a coupling element (41) which is held axially form-closed against the controlling member (31) and can be induced to move by means of an adjusting element (14) acting through a guide drive mechanism with wedge surfaces (50, 53 or 54, 54', 57, 57') and whereby the chuck piston (8) and the coupling element (41) are provided with one or more successive interacting undulations in the form of recesses (27, 27' or 44, 44') and projections (28, 28' or 45, 45') with support surfaces (29, 29', 29'' or 46, 46', 46'') running perpendicular to the axis which transmit the operating forces,
**characterized in that,**
the undulations can be connected with each other and disconnected from each other by means of radial displacements of the coupling element (41),
that the coupling element (41) is held in groove (38) provided in the controlling member (31) by means of a T-shaped attachment (42) in such a way as to be radially moveable,
that the ends of the coupling element (41) and the chuck piston (8) which face each other are each provided with a notch (43 or 26) which is not radially or axially enclosed, in which the chuck piston (8) or the coupling element (41) are inserted at opposite sides and whose dimensions correspond to the other component in each case, and
that the undulations of the coupling element (41) and the chuck piston (8) are machined into the surfaces which extend in the longitudinal direction of the notches (43 or 26) and which are situated opposite each other.

2. A device in accordance with Claim 1,
**characterized in that,**
the undulations in the centre of the longitudinal axis (A) of the chuck piston (8) and the coupling element (41) are machined into the chuck piston (8) and the coupling element (41) in the form of regular axially perpendicular recesses (27, 27', 44, 44') and projections (28, 28', 45, 45') and protrude over or undercut their longitudinal axes (A) by equal amounts.

3. A device in accordance with Claim 1 or 2,
**characterized in that,**
the guide drive mechanism provided for radial displacement of the coupling element (41) is produced in the form of wedge surfaces (50, 53 or 54, 54', 57, 57') mounted on the coupling element (41) and the adjusting element (14) in such a way as to be turned towards each other and run inclined to the longitudinal axes (A) of the coupling element (41) and the adjusting element (14).

4. A device in accordance with one or more of Claims 1 to 3,
**characterized in that,**
the adjusting element (14) is provided with wedge surfaces (53, 57, 57') located opposite each other and running inclined to the longitudinal axis (A) of the adjusting element (14), which interact with the wedge surfaces (50, 54, 54') of the coupling element (41).

5. A device in accordance with Claim 4,
**characterized in that,**
the coupling element (41) demonstrates one or more moulded or screwed on radial protrusions (47, 48) which protrude above the controlling member (31) and/or the chuck piston (8), and the wedge surfaces (50, 54') are machined onto these protrusions (47, 48).

6. A device in accordance with one or more of Claims 1 to 5,
**characterized in that,**
the wedge surfaces (53, 57) of the adjusting element (14) are machined onto wedge-formed parts (51, 55) inserted into the adjusting element (14).

7. A device in accordance with one or more of Claims 1 to 6,
**characterized in that,**
the external generated surfaces of the protrusions (47, 48) of the coupling element (41) and/or the internal generated surfaces of the wedge-formed parts (51, 55) of the controlling member (31) are produced as guide surfaces (59, 60 or 61, 62).

8. A device in accordance with one or more of Claims 1 to 7,
**characterized in that,**
the chuck piston (8) and/or the coupling element (41) are provided with one or more insertion chamfers (58) machined onto the projections (28, 28' or 45, 45') forming the undulations on the chuck piston (8) and/or the coupling element (41).

9. A device in accordance with one or more of Claims 1 to 8,
**characterized in that,**
in a work piece carrier in the form of a heavy duty chuck (3) which can be releasably fastened by means of a clamp bolt (12) on an adapter element (11), the clamping sleeve acting on the clamping bolt (12) is produced as an adjusting element (14) which interacts with the coupling element (41).

10. A device in accordance with one or more of Claims 1 to 9,
**characterized in that,**
the chuck piston (8) can be releasably coupled by means of, for example, an intermediate piece (71) screwed onto the chuck piston (8) and acting as an adapter to the coupling element (41).

## Revendications

1. Dispositif (1) d'accouplement d'un piston de serrage (8) d'un porte-pièce, en particulier d'un mandrin de serrage automatique (3), équipé d'un membre d'actionnement (31) conçu de préférence sous la forme d'une tige de traction, le membre d'actionnement (31) étant muni d'un élément d'accouplement (41) retenu rigidement en direction axiale sur le membre d'actionnement (31) la forme duquel il épouse et qui, au moyen d'un élément de réglage (14) et de renvois munis de tenons (50, 53 ou 54, 54', 57, 57'), se laisse déplacer corrélativement, et que, pour transmettre les forces d'actionnement, le piston de serrage (8) ainsi que l'élément d'accouplement (41) possèdent un ou plusieurs crochets concourants, assignés les uns aux autres et formés d'évidements (27, 27' ou 44, 44') et de saillies (28, 28' ou 45, 45') avec des surfaces de portée (29, 29', 29'' ou 46, 46', 46'') perpendiculaires à l'axe,
se caractérisant par le fait que
- les crochets se laissent accoupler et découpler par des déplacements radiaux de l'élément d'accouplement (41),
- au moyen d'un embout (42) sous la forme d'un T, l'élément d'accouplement (41) soit retenu de manière à se laisser déplacer radialement dans une gorge (38) correspondante du membre d'actionnement (31),
- que les extrémités s'opposant de l'élément d'accouplement (41) et du piston de serrage (8) soient munies d'évidements axialement et radialement ouverts (43 ou 26), dans lesquels le piston de serrage (8) ou le membre d'actionnement (41) s'engrènent mutuellement et dont les dimensions correspondent les uns aux autres, et
- que les crochets de l'élément d'accouplement (41) et du piston de serrage (8) soient pratiqués dans les faces s'opposant, orientées longitudinalement par rapport aux évidements (43 ou 26).

2. Dispositif d'après la revendication 1,
se caractérisant par le fait que
les crochets au centre de l'axe longitudinal (A) du piston de serrage (8) et de l'élément d'accouplement (41) soient pratiqués sous la forme d'évidements plans (27, 27', 44, 44') perpendiculaires à l'axe, et de saillies (28, 28', 45, 45'), dépassant uniformément leurs axes longitudinaux (A).

3. Dispositif d'après les revendications 1 ou 2,
se caractérisant par le fait que
les renvois prévus pour le déplacement radial de l'élément d'accouplement (41) soient conçus sous la forme de tenons biais (50, 53 ou 54, 54', 57, 57'), pratiqués sur le membre (41) et l'élément de réglage (14), qui sont assignés les uns aux autres et inclinés dans leurs axes longitudinaux (A).

4. Dispositif d'après les revendications 1 à 3,
se caractérisant par le fait que
pour le déplacement radial de l'élément d'accouplement (41), l'élément de réglage (14) soit muni de tenons biais (53, 57, 57') opposés, inclinés dans son axe longitudinal (A), et concourant avec les tenons biais (50, 54, 54') de l'élément d'accouplement (41).

5. Dispositif d'après la revendication 4,
se caractérisant par le fait que
l'élément d'accouplement (41) comprend un ou plusieurs embouts (47, 48) vissés ou formés de la même pièce, saillant radialement au-delà du membre d'actionnement (31) et/ou du piston de serrage (8), et sur lesquels sont pratiqués des tenons biais (50, 54').

6. Dispositif d'après une ou plusieurs des revendications 1 à 5,
se caractérisant par le fait que
les tenons biais (53, 57) de l'élément de réglage (14) soient pratiqués sur des coins (51, 55) insérés dans celui-ci.

7. Dispositif d'après une ou plusieurs des revendications 1 à 6,
se caractérisant par le fait que
l'extérieur des enveloppes des embouts (47, 48) de l'élément d'accouplement (41) et/ou l'intérieur des enveloppes des coins (51, 55) de l'élément de réglage (31) soient conçus sous la forme de surfaces de guidage (59, 60 ou 61, 62).

8. Dispositif d'après une ou plusieurs des revendications 1 à 7,
se caractérisant par le fait que
le piston de serrage (8) et/ou l'élément d'accouplement (41) soient munis d'un ou de plusieurs rampes d'introduction (58) pratiquées sur leurs crochets formés par les saillies (28, 28' ou 45, 45').

9. Dispositif d'après une ou plusieurs des revendications 1 à 8,
se caractérisant par le fait que
dans le cas d'un mandrin de serrage (3) servant de portepièce et monté à l'aide de boulons de fixation (12) sur un membre d'adaptation (11), la douille de serrage agissant sur les boulons de fixation (12) soit conçue sous la forme d'un élément de réglage (14) concourant avec l'élément d'accouplement (41).

10. Dispositif d'après une ou plusieurs des revendications 1 à 9,
se caractérisant par le fait que
p. ex. au moyen d'une pièce intermédiaire (71) vissée en tant qu'adaptateur sur le piston de serrage (8), ce dernier se laisse accoupler à l'élément d'accouplement (41).
